(19) Europäisches Patentamt / European Patent Office / Office européen des brevets

(11) **EP 3 995 336 B1**

(12) **EUROPEAN PATENT SPECIFICATION**

(45) Date of publication and mention
of the grant of the patent:
**26.04.2023 Bulletin 2023/17**

(21) Application number: **21202745.2**

(22) Date of filing: **14.10.2021**

(51) International Patent Classification (IPC):
*B60K 6/48* (2007.10)       *B60W 10/02* (2006.01)
*B60W 10/06* (2006.01)       *B60W 10/08* (2006.01)
*B60W 20/10* (2016.01)       *B60W 30/18* (2012.01)
*B60W 10/184* (2012.01)

(52) Cooperative Patent Classification (CPC):
**B60K 6/48; B60K 6/547; B60W 10/02;**
**B60W 10/06; B60W 10/08; B60W 10/184;**
**B60W 20/10; B60W 30/18072; B60W 30/18127;**
B60K 2006/4808; B60W 2030/1809;
B60W 2510/101; B60W 2540/10; B60W 2540/12;
B60W 2540/16;                                    (Cont.)

(54) **HYBRID ELECTRIC VEHICLE CONTROL**

STEUERUNG FÜR EIN HYBRID-ELEKTROFAHRZEUG

COMMANDE DE VÉHICULE ÉLECTRIQUE HYBRIDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.11.2020 JP 2020187169**

(43) Date of publication of application:
**11.05.2022 Bulletin 2022/19**

(73) Proprietor: **Suzuki Motor Corporation**
**Shizuoka 432-8611 (JP)**

(72) Inventor: **Ito, Yoshiki**
**Shizuoka, 432-8611 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**EP-A1- 2 826 681       EP-A1- 3 118 078**
**US-A1- 2015 142 230**

(52) Cooperative Patent Classification (CPC): (Cont.)
 B60W 2710/083; B60W 2710/182; Y02T 10/60;
 Y02T 10/62

**Description**

[Technical Field]

The present invention relates to a hybrid electric vehicle control device.

[Background Art]

A hybrid electric vehicle control known from JP2011-246065A prohibits regenerative-power generation during coasting with a gear stick moved to a neutral position immediately after a vehicle operator has released an accelerator pedal, but it permits the regenerative-power generation by a motor generator with the gear stick moved to any one of the other positions.

US 2015/142230 A1 relates to a method for a vehicle having an electric machine. The electric machine is coupled to at least one wheel of the vehicle. The vehicle can optionally be operated in at least a first operating mode and a second operating mode. In the first operating mode, the electric machine applies a torque to the wheel, and in the second operating mode the electric machine does not apply any torque to the wheel. In the method, a request for switching over between the first and the second operating modes is detected and the vehicle is operated in a transition operating mode if the request to switch over from the first operating mode into the second operating mode is detected. In the transmission operating mode, a torque is applied to the at least one wheel counter to a rolling direction of the vehicle for at least a predetermined time.

[Prior Art]

[Patent Literature]

    Patent Literature 1: JP2011-246065A
    Patent Literature 2: US 2015/142230 A1

[Summary of Invention]

[Technical Problem]

However, in the known hybrid electric vehicle control, the vehicle energy efficiency drops while the regenerative-power generation is prohibited during coasting.

An object of the present invention is to provide a hybrid electric vehicle control device having good effectiveness in preventing the vehicle energy efficiency from falling even though the regenerative-power generation is prohibited during coasting with a transmission in neutral.

[Solution to Problem]

There is provided a hybrid electric vehicle control device as set out in independent claim 1. Advantageous developments are defined in the dependent claims 2 to 5.

[Advantageous Effect of Invention]

The present invention proves to have good effectiveness in preventing the vehicle energy efficiency from falling even though the regenerative-power generation is prohibited during coasting with a transmission in neutral.

[Brief Description of Drawings]

    FIG. 1 is a schematic diagram of a hybrid vehicle system using an example driveline configuration.
    FIG. 2 is a flowchart showing a method for operating a driveline of the hybrid vehicle in EV mode.
    FIG. 3 is a flowchart showing a method for calculating a pseudo engine speed for use in the method of FIG. 2.
    FIG. 4 is a flowchart showing a method for operating a driveline of the hybrid vehicle in HEV mode.

FIG. 5 depicts an example operator torque request map including empirically determined values of an operator torque request versus operator input to an accelerator pedal and engine speed (or pseudo engine speed).

FIG. 6 depicts an example plot of an operator intended total brake torque $T_{total\_b}$ versus operator input to a brake pedal at a certain vehicle speed to approximate an example plot of a friction braking torque $T_{fb}$ versus the operator input to the brake pedal for the most part.

FIG. 7 depicts a prophetic sequence for providing a regenerative braking torque $T_{rb}$ in addition to a friction braking torque $T_{fb}$ during coasting with a transmission in neutral.

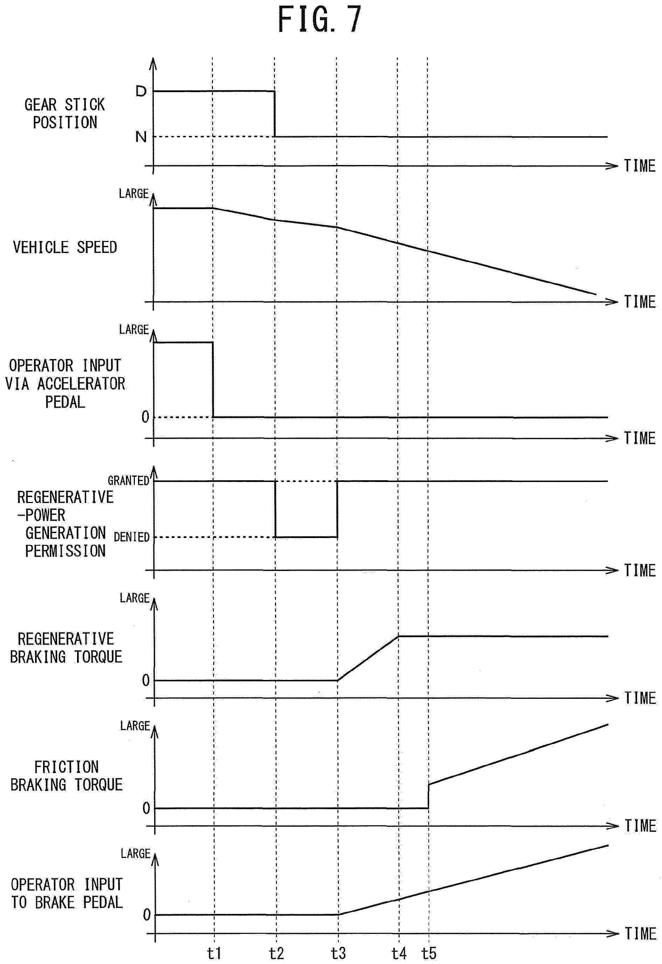

The first plot from the top of FIG. 7 is a plot of gear stick position versus time. The Y axis represents gear stick position. The gear stick is placed at a drive "D" position and the manual transmission is not in neutral when the trace is at a higher level. The gear stick is placed at a neutral "N" position and the manual transmission is in neutral when the trace is at a lower level. The X axis represents time and time increases in the direction of the X axis arrow.

The second plot from the top of FIG. 7 is a plot of vehicle speed versus time. The Y axis represents vehicle speed and vehicle speed increases in the direction of the Y axis arrow. The X axis represents time and time increases in the direction of the X axis arrow.

The third plot from the top of FIG. 7 is a plot of operator input via an accelerator pedal versus time. The Y axis represents operator input via accelerator pedal. The accelerator pedal is applied when the trace is at a higher level. The accelerator pedal is released when the trace is at a lower level. The X axis represents time and time increases in the direction of the X axis arrow.

The fourth plot from the top of FIG. 7 is a plot of regenerative-power generation permission versus time. The Y axis represents regenerative-power generation permission. The regenerative-power generation permission is granted to permit use of regenerative-power generation when the trace is at a higher level. The regenerative-power generation permission is denied for prohibiting use of regenerative-power generation when the trace is at a lower level. The X axis represents time and time increases in the direction of the X axis arrow.

The fifth plot from the top of FIG. 7 is a plot of desired regenerative braking torque versus time. The Y axis represents desired regenerative braking torque and desired regenerative braking torque increases in the direction of the Y axis arrow. The X axis represents time and time increases in the direction of the X axis arrow.

The sixth plot from the top of FIG. 7 is a plot of desired friction braking torque versus time. The Y axis represents friction braking torque and friction braking torque increases in the direction of the Y axis arrow. The X axis represents time and time increases in the direction of the X axis arrow.

The seventh plot from the top of FIG. 7 is a plot of operator input to a brake pedal versus time. The Y axis represents operator input to brake pedal. Operator input to brake pedal increases in the direction of the Y axis arrow. The brake pedal is released when the trace is at a lower level.

[Detailed Description]

Disclosed is a hybrid electric vehicle control device as set out in independent claim 1. Advantageous developments are defined in the dependent claims 2 to 5.

The present invention proves to have good effectiveness in preventing the vehicle energy efficiency from falling even though the regenerative-power generation is prohibited during coasting with a transmission in neutral.

[Embodiment(s)]

Referring to the accompanying drawings, the present description is related to controlling a vehicle driveline of a hybrid electric vehicle.

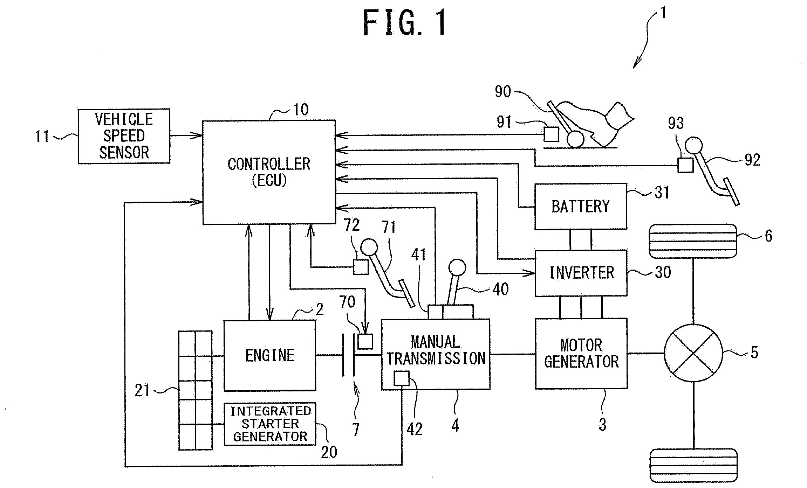

Referring to FIG. 1, the vehicle driveline in a hybrid electric vehicle 1 may be powered by an engine 2 such as an internal combustion engine and it may include an electric machine such as a motor generator 3, a transmission such as a manual transmission (MT) 4, a differential 5, vehicle wheels 6, and a controller 10 such as an electronic control unit (ECU).

Engine 2 includes multiple cylinders. During operation, each cylinder within engine 2 typically undergoes a four stroke cycle: the cycle includes the intake stroke, compression stroke, expansion stroke, and exhaust stroke.

A starter such as an integrated starter generator (ISG) 20 selectively supplies torque to a crankshaft of engine 2 via a belt 21 or chain. ISG is the technology which integrates the starter and generator functionality together. ISG controller is designed to control starter and generator functionality.

Motor/generator 3 acts either as a motor or a generator. Motor/generator 3 acts as a motor to convert available electrical energy from a rechargeable battery 31 through an inverter (INV) 30 to mechanical energy or as a generator to generate regenerative power by converting mechanical energy from differential 5 to electrical energy.

Inverter 30 controlled by controller 10 can convert DC current from battery 31 to three-phase AC currents to provide the three-phase AC currents to motor generator 3. It can convert the three-phase AC currents generated by motor generator 3 to DC current to recharge battery 31. Battery 31 is a secondary battery such as lithium-ion battery.

Manual transmission 4 includes a shifting mechanism, not shown, to select between gears to transmit engine torque therethrough at a gear ratio of the selected gear. Torque output from manual transmission 4 may in turn be relayed to vehicle wheels 6 to propel hybrid electric vehicle 1 via an output shaft. The output shaft delivers torque from manual transmission 4 to vehicle wheels 6 via a differential 5. Motor torque output from motor/generator 3 may be relayed to vehicle wheels 6 to propel hybrid electric vehicle 1 alone or in combination with torque output from manual transmission 4 via its rotor shaft if motor/generator 3 acts as a motor. The rotor shaft delivers torque from motor/generator 3 to vehicle wheels 6 via differential 5.

Manual transmission 4 can select between five forward gears, i.e., 1st-5th, reverse gear and a "neutral" in the gearbox. The number of forward gears may vary with different specifications of hybrid electric vehicles, so it is not limited to five.

A knob, which forms the handle of a gear stick 40, includes a diagram of the shift pattern having seven possible positions: the five forward gears, a reverse gear, and a central "neutral" position. The gear stick 40 is moved to the positions when selecting a gear or "neutral" position. A shift position sensor 41 is coupled to gear stock 40 to detect the position to which gear stick 40 is moved. Shift position sensor 41 is connected to controller (ECU) 10 to provide a sensor signal indicative of the result detected by the sensor 41 to controller (ECU) 10.

A neutral switch 42 is provided to manual transmission 4. Neutral switch 42 is coupled manual transmission 4 and connected to controller (ECU) 10. Neutral switch 42 is arranged to detect a "neutral" state, i.e., a state in which no gear is engaged in the gearbox of manual transmission 4, and it is closed or ON when manual transmission 4 in in neutral.

A driveline disconnect clutch 7 is positioned between internal combustion engine 2 and manual transmission 4 to selectively disconnect engine 2 from the vehicle driveline. Driveline disconnect clutch 7 such as a friction clutch can transmit all of input torque from engine 2 to an input shaft of manual transmission 4.

Driveline disconnect clutch 7 may be electrically or hydraulically actuated using such as a clutch actuator 70. In operation, driveline disconnect clutch 7 may be actuated to have three operating states:

open, zero torque is transmitted between input shaft (connected to engine 2) and output shaft (connected to motor generator 3),
slipping, some amount of torque is transmitted between input and output shaft,
closed, there is no slip between input and output shaft, all of the input torque is transmitted through the clutch.
Clutch actuator 70 is controlled by controller (ECU) 10.

Controller (ECU) 10 controls clutch actuator 70. Controller (ECU) 10 may switch between the operating states of driveline disconnect clutch 7 using clutch actuator 70 depending on operator input to clutch pedal 71.

A clutch pedal sensor 72 is coupled to clutch pedal 71 for sensing operator input to clutch pedal 71 (e.g., position and/or force and/or pedal travel applied by foot). Clutch pedal sensor 72 provides a sensor signal indicative of the result sensed by clutch pedal sensor 72 to controller (ECU) 10.

Hybrid electric vehicle 1 has an accelerator pedal 90 manipulated by a driver. An accelerator pedal sensor 91 is coupled to accelerator pedal 90 for sensing operator input via accelerator pedal 90 (e.g., position and/or force and/or pedal travel applied by foot). Accelerator pedal sensor 91 provides a sensor signal indicative of the result sensed by accelerator pedal sensor 91 to controller (ECU) 10.

Hybrid electric vehicle 1 has a brake pedal 92 manipulated by a driver. A brake pedal sensor 93 is coupled to brake pedal 92 for sensing operator input to brake pedal 92 (e.g., position and/or force and/or pedal travel applied by foot). Brake pedal sensor 93 provides a sensor signal indicative of the result sensed by brake pedal sensor 92 to controller (ECU) 10.

Controller (ECU) 10 is shown in FIG. 1 as a conventional microcomputer unit including: central processing unit (CPU), random access memory (RAM), read only memory (ROM), flash memory (or keep alive memory), input/output ports, and a conventional data bus.

The microcomputer unit stores in its non-transitory memory, i.e., ROM, programs together with various data and various computer readable maps for enabling controller (ECU) 10 to fulfill its intended function. In other words, with CPU executing instructions of the programs stored in ROM using ROM as working area, the microcomputer unit enables controller (ECU) 10 to fulfill its intended function.

Controller (ECU) 10 is shown receiving various signals from the forgoing sensors coupled to hybrid electric vehicle 1 and a signal from a vehicle speed sensor 11 coupled to hybrid electric vehicle 1. Using the signal from vehicle speed sensor 11, controller (ECU) 10 determines vehicle speed at which hybrid electric vehicle 1 moves.

Electric vehicle (EV) mode and hybrid electric vehicle (HEV) mode are two of various operating or driving modes for hybrid electric vehicle 1.

In EV mode, driveline clutch 7 may be opened to disconnect engine 2 from the vehicle driveline, electric power is supplied by battery (traction battery) 31, and only motor generator 3 is used as a traction motor to drive hybrid electric vehicle 1. In HEV mode, driveline clutch 7 may be closed, and only engine 2 or engine 2 and motor generator 3 are used to drive hybrid electric vehicle 1.

Controller (ECU) 10 may switch between EV mode and HEV mode depending on operator input via accelerator pedal 90 and engine speed.

Controller (ECU) 10 may switch to HEV mode following determination that an operator torque request $T_{dr}$ that is a function of operator input via accelerator pedal 90 and engine speed exceeds a predetermined transition threshold to HEV mode.

Controller (ECU) 10 may switch back to EV mode following determination that operator torque request $T_{dr}$ falls below another predetermined transition threshold to EV mode.

In the foregoing example, controller (ECU) 10 stores in its non-transitory memory executable instructions for denying regenerative-power generation permission to prohibit generating regenerative power using motor generator 3 as a generator following determination that gear stick 40 is in neutral "N" position so manual transmission 4 is in neutral during coasting. Controller (ECU) 10 may prohibit the generation of regenerative power during coasting with manual transmission 4 in neutral or with disconnect clutch pedal 71 being applied to open disconnect clutch 7 for disconnecting internal combustion engine 2.

Controller (ECU) 10 stores in its non-transitory memory executable instructions for stopping prohibiting generating regenerative power using motor generator 3 by granting regenerative-power generation permission.

Controller (ECU) 10 stores in its non-transitory memory executable instructions for operating motor generator 3 is in a torque control mode in response to the pedal travel of brake pedal 92 during coasting with transmission 4 in neutral to provide a regenerative braking force depending on operator input to brake pedal 92 (e.g., pedal travel of brake pedal 92).

Controller (ECU) 10 stores in its non-transitory memory executable instructions for operating, in EV mode, motor generator 3 in a torque control mode over the period of application of brake pedal 92 during coasting with gear stick 40 not placed at neutral position so the transmission 4 not in neutral to provide a combined braking force of a friction braking force component depending on the pedal travel of brake pedal 92 and an engine braking force component that would be initiated upon release of accelerator pedal 90 in HEV mode.

Controller (ECU) 10 stores in its non-transitory memory executable instructions for determining an operator intended total brake torque $T_{total\_b}$ as a function of operator input to brake pedal 92, for setting a total of a regenerative braking torque request and a friction braking torque request as the operator intended total brake torque $T_{total\_b}$, and for setting the regenerative braking torque request as the operator intended total brake torque $T_{total\_b}$ if the operator input to brake pedal 92 is not greater than a predetermined value.

If the operator input to brake pedal 92 is not greater than the predetermined value, controller (ECU) 10 sets an upper regenerative braking torque request limit.

If a regenerative and friction brake blend control is not intended, it is better to set the upper regenerative braking torque request limit low enough not to interfere with a relationship of an operator intended braking force with the operator input to brake pedal 92.

It is better that by the time operator input to brake pedal 92 reaches around 10 % of the full pedal travel, the regenerative braking torque request reaches the upper limit.

Controller (ECU) 10 stores in its non-transitory memory executable instructions for calculating, in EV mode, pseudo engine speed $N_e(n)$ as estimating engine speed if similar operation was carried out in HEV mode.

Controller (ECU) 10 calculates pseudo engine speed $N_e(n)$ as a function of, for example, operator torque request, operator input to disconnect clutch pedal 71, position of gear stick 40, moment of inertia of engine and pseudo engine speed $N_e(n)$.

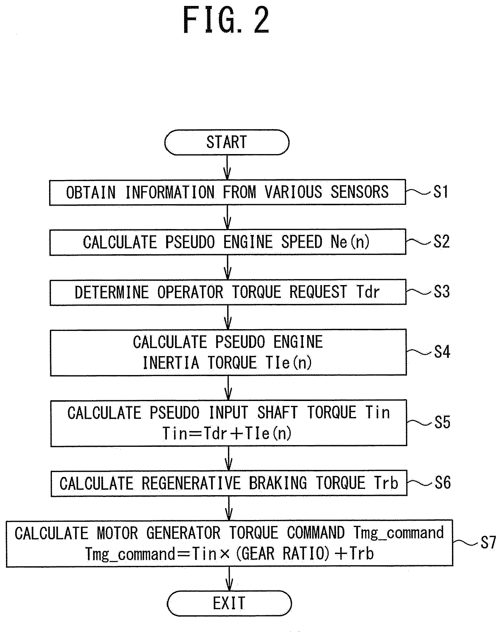

Referring now to FIG. 2, a flowchart of a method for calculating motor generator torque command $T_{mg\_command}$ to motor generator 3 for driving hybrid electric vehicle 1 in EV mode is shown. The method of FIG. 2 may be stored in non-transitory memory of controller 10 (ECU) of FIG. 1 as executable instructions. It starts following determination that there is a shift to EV mode and proceeds to exit following determination that there is a shift from EV mode to HEV mode.

At step S1, the method of FIG. 2 obtains information from various sensors coupled to hybrid electric vehicle 1. Information from various sensors for hybrid electric vehicle 1 may include but is not limited to vehicle speed, gear stick position, operator input via accelerator pedal 90 (e.g., force and/or position and/or pedal travel applied by foot), operator input to clutch pedal 71 (e.g., force and/or position and/or pedal travel applied by foot), and operator input to brake pedal 92 (e.g., force and/or position and/or pedal travel applied by foot). After step S1, the method of FIG. 2 proceeds to step S2.

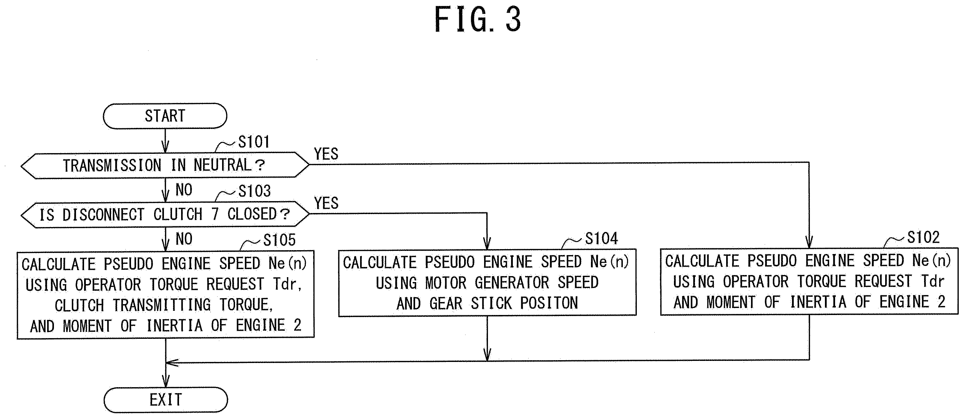

At step S2, the method of FIG. 2 calculates pseudo engine speed $N_e(n)$ that is defined by Equation (2) to be described later. Pseudo engine speed $N_e(n)$ will be later described referring to FIG. 3. After step S2, the method of FIG. 2 proceeds to step S3.

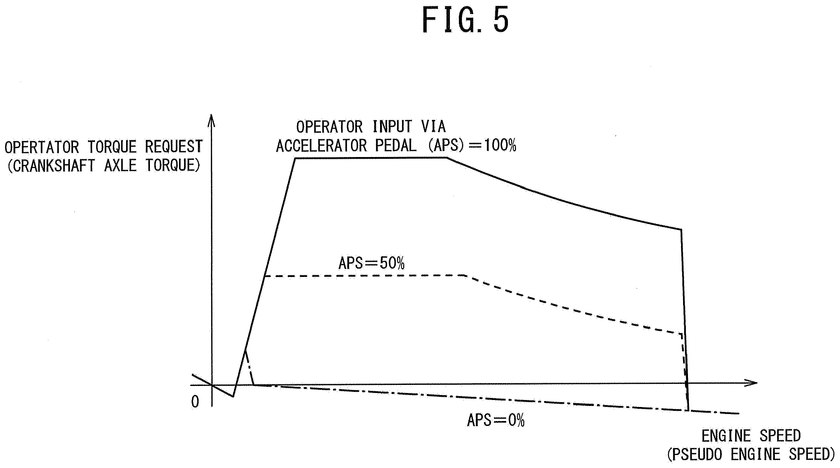

At step S3, the method of FIG. 2 retrieves executable data as illustrated in an operator torque demand map of FIG. 5 using operator input via accelerator pedal 90 (i.e., pedal travel "APS" of accelerator pedal 90 applied by foot) obtained at step S1 and pseudo engine speed $N_e(n)$ calculated at step S2 to determine operator torque request $T_{dr}$ requested by a driver. After step S3, the method of FIG. 2 proceeds to step S4.

As readily seen in the bottom left corner of FIG. 5, the operator torque request $T_{dr}$ has negative values at low pseudo engine speeds below the idle speed of engine 2 irrespective of operator input via accelerator pedal 90 (accelerator pedal stroke, APS) in order to simulate engine stall when pseudo engine speed falls below the idle speed of engine 2 in EV mode.

As readily seen in the bottom right corner of FIG. 5, the operator torque request $T_{dr}$ has negative values at high pseudo engine speeds near over revolution of engine 2 irrespective of operator input via accelerator pedal 90 (accelerator pedal stroke, APS) in order to simulate engine shutdown through fuel cut when pseudo engine speed approaches over revolution of engine 2 in EV mode.

At step S4, the method of FIG. 2 calculates pseudo engine inertia torque $TI_e(n)$. After step S4, the method of FIG. 2 proceeds to step S5.

Pseudo engine inertia torque $TI_e(n)$ is the product of the average rate at which pseudo engine speed changes and moment of inertia of engine and it is defined by the following Equation (1).

$$TI_e(n) = [\{N_e(n\text{-}1) - N_e(n)\} / t_p] \times I_e \ldots (1),$$

where:

$TI_e(n)$ is the pseudo engine inertia torque [Nm],
$N_e(n)$ is the current value of the pseudo engine speed [rad/sec],
$N_e(n\text{-}1)$ is the previous value of the pseudo engine speed [rad/sec],
$I_e$ is the engine inertia [kg.m$^2$],
$t_p$ is the time period [sec] that is the reciprocal of the frequency indicative of the number of repetitions of execution of a program in one second.

At step S5, the method of FIG. 2 adds operator torque request $T_{dr}$ that is determined at step S3 to pseudo engine inertia torque $TI_e(n)$ that is determined at step S4 to calculate pseudo input shaft torque $T_{in}$, i.e., $T_{in} = T_{dr} + TI_e(n)$. Pseudo input shaft torque $T_{in}$ is equivalent to the torque that were provided to an input shaft of manual transmission 4 by engine 2. After step S5, the method of FIG. 2 proceeds to step S6.

During vehicle operation with manual transmission 4 in neutral or with driveline disconnect clutch 71 open, pseudo input shaft torque Tin becomes zero because operator torque request $T_{dr}$ and pseudo engine inertia torque $TI_e(n)$ have the same absolute values, and they have opposite signs. Thus, determining the state of manual transmission 4 and the state of driveline disconnect clutch 7 is no longer necessary.

At step S6, the method of FIG. 2 calculates regenerative braking torque $T_{rb}$ as a function of motor/generator speed, which is the speed of motor/generator 3, and operator input to brake pedal 92. After step S6, the method of FIG. 2 proceeds to step S7.

Regenerative braking torque $T_{rb}$ has its sign negative. The setting is such that the absolute value of regenerative braking torque $T_{rb}$ tends to increase with increasing pedal travel of the brake pedal 92, but it become zero during vehicle operation at low MG speed range where vehicle speed is low.

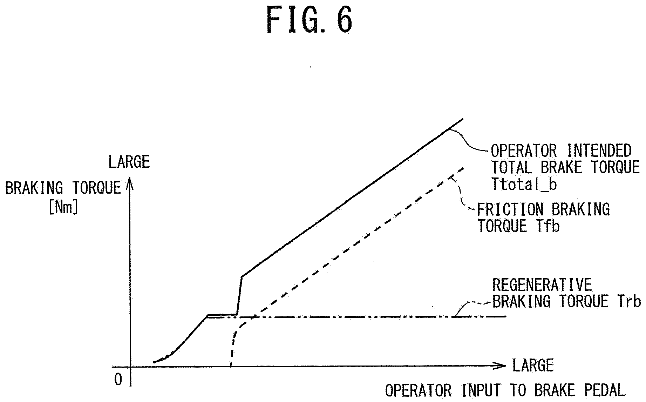

Referring to FIG. 6, it is now described how to approximate a friction braking torque $T_{fb}$ versus operator input to brake pedal 92 without relying on so-called "regenerative and friction brake blend control." In FIG. 6, the broken line shows friction braking torque $T_{fb}$ versus operator input to brake pedal 92. In a conventional hydraulic brake system, during a small input range where operator input to brake pedal 92 changes from 0 % to a certain low %, or vise-versa, the friction braking torque $T_{fb}$ does not appear ($Tf_b = 0$), but it varies with different values of operator input to brake pedal 92 in a predetermined pattern during an uninterrupted change from the certain low % to 100 %, or vice versa. According to the example, this relationship is kept for the most part because, as mentioned before, by the time operator input to brake pedal 92 reaches around the certain % of the full pedal travel, regenerative braking torque $T_{rb}$ reaches the predetermined regenerative braking torque upper limit and stays at this upper limit as drawn by the two-dot chain line during the uninterrupted change, in operator input to brake pedal 92, from the certain low % to 100 %, or vice versa. This may be confirmed with the fully drawn operator intended total brake torque $T_{total\_b}$.

At step S7, the method of FIG. 2 adds regenerative braking torque $T_{rb}$ to the product of pseudo input shaft torque Tin and the gear ratio of a gear stage selected by gear stick 40 of manual transmission 4 to make motor generator torque command $T_{mg\_commnd}$, i.e., $T_{mg\_commnd} = Tin \times (gear\ ratio) + T_{rb}$. It is to be noted that gear ratio is zero during driving with manual transmission 4 in neutral.

Referring now to FIG. 3, the calculation proceeding for pseudo engine speed $N_e(n)$ in step S2 is described.

At step S101, the method of FIG. 3 judges whether or not manual transmission 4 is in neutral. In one example, the method of FIG. 3 may judge that manual transmission 4 is in neutral when gear stick 40 is at the neutral position. If the method of FIG. 3 judges that manual transmission 4 is in neutral, the method proceeds to step S102.

Otherwise, the method of FIG. 3 proceeds to step S 103.

At step S102, the method of FIG. 3 uses operator torque request $T_{dr}$ and moment of inertia of engine 2 to calculate pseudo engine speed $N_e(n)$. The method of FIG. 3 proceeds to exit after calculating pseudo engine speed $N_e(n)$ at step S102.

If manual transmission 4 is in neutral, in HEV mode, the average rate at which engine speed changes is a function of engine torque and moment of inertia of engine. So, in EV mode, the method of FIG. 3 uses operator torque request $T_{dr}$ and moment of inertia of engine 2 to calculate pseudo engine speed $N_e(n)$ as the following Equation (2).

$$N_e(n) = N_e(n-1) + (T_{dr} / I_e) \times t_p \dots (2),$$

where:

$N_e(n)$ is the current value of the pseudo engine speed [rad/sec],
$N_e(n-1)$ is the previous value of the pseudo engine speed [rad/sec],
$I_e$ is the engine inertia [kg.m$^2$],
$T_{dr}$ is the operator torque request [Nm],
$t_p$ is the time period [sec] that is the reciprocal of the frequency indicative of the number of repetitions of execution of a program in one second.

In operation, a driveline disconnect clutch can have four operating states:

open, zero torque is transmitted between input and output shaft.
slipping, some amount of torque is transmitted between input and output shaft; the speed difference between input and output shaft is significant (e.g., 500 rpm)
micro-slipping, almost all of the input torque is transmitted through the clutch; the speed difference between input and output shaft is very small, around 5-10 rpm
closed, there is no slip between input and output shaft, all of the input torque is transmitted through the clutch.

At step S103, the method of FIG. 3 judges whether or not disconnect clutch 7 is closed depending on the pseudo operating state of disconnect clutch 7 derived from operator input to clutch pedal 71. If the method of FIG. 3 judges that the pseudo operating state indicates that disconnect clutch 7 is closed, the method of FIG. 3 proceeds to step S104.

Otherwise, the method of FIG. 3 proceeds to step S 105.

At step S103, the method of FIG. 3 judges that disconnect clutch 7 is closed following determination that the following conditions 1 and 2 are met. Condition 1 alone is not enough to eliminate the case in which the pseudo operating state of disconnect clutch 7 is transiting toward a closed state (i.e., the pseudo speed difference between input and output shaft is decreasing toward zero). So, the method of FIG. 3 judges that the pseudo operating state of disconnect clutch 7 is in a closed state following determination that condition 2 (i.e., the pseudo difference between input and output shaft is almost zero) is met, too.

$$\text{Condition 1} \dots |T_{dr}| < T_c$$

$$\text{Condition 2} \dots N_i - \alpha < N_e(n-1) < N_i + \alpha$$

where:

$N_e(n-1)$ is the previous value of the pseudo engine speed [rad/sec],
$T_{dr}$ is the operator torque request [Nm],
$T_c$ is the torque capacity of disconnect clutch 7 [Nm], which depends on normal force acting on disconnect clutch 7 that can be adjusted depending on operator input to clutch pedal 71 (i.e., the amount of torque that can be transmitted by disconnect clutch 7 when it is slipping or when it is fully closed),
$N_i$ is the input shaft speed [rad/sec],
$\alpha$ is the threshold used to judge whether or not the pseudo operating state is in a closed state.

Input shaft speed Ni depends on motor generator speed $N_{mg}$ that is the revolution speed of motor generator 3, and a gear ratio of the gear stage selected in manual transmission 4. So, the motor generator speed and the gear ratio are used to calculate the input shaft speed $N_i$.

At step S104, the method of FIG. 3 calculates pseudo engine speed $N_e(n)$ using motor generator speed and gear stick position. After step S104, the method of FIG. 3 proceeds to exit.

If the pseudo operating state of disconnect clutch 7 is in a closed state, in HEV mode, the engine speed is equal to the input shaft speed. So, in EV mode, the method of FIG. 3 uses motor generator speed $N_{mg}$ and the gear ratio of the gear stage in transmission 4 corresponding to the selected gear stick position to calculate pseudo engine speed $N_e(n)$ as the following Equation (3).

$$N_e(n) = N_{mg} \times (\text{Gear ratio}) \ldots (3)$$

where:

$N_e(n)$ is the current value of the pseudo engine speed [rad/sec],
$N_{mg}$ is the motor generator speed [rad/sec],
Gear ratio is a speed ratio between the input shaft speed Ni and the motor generator speed $N_{mg}$.

At step S105, the method of FIG. 3 uses operator torque request $T_{dr}$, clutch torque capacity of disconnect clutch 7 (i.e., the amount of torque which disconnect clutch 7 can transmit) and moment of inertia of engine 2 to calculate pseudo engine speed $N_e(n)$. After step S105, the method of FIG. 3 proceeds to exit.

If disconnect clutch 7 is not closed, the method of FIG. 3 can calculate pseudo engine speed $N_e(n)$ using the same calculation method although clutch slipping state, in which some amount of torque is transmitted between input and output shaft of disconnect clutch 7, and clutch open state, in which zero torque is transmitted between input and output shaft of disconnect clutch 7, are included.

In HEV mode, the average rate at which engine speed changes is a function of engine torque, moment of inertia of engine and torque capacity of disconnect clutch 7. So, in EV mode, the method of FIG. 3 uses operator torque request $T_{dr}$ and moment of inertia of engine to calculate pseudo engine speed $N_e(n)$ as the following Equation (4).

$$N_e(n) = N_e(n-1) + (T_{dr}-T_c / I_e) \times t_p \ldots (4),$$

$T_c > 0$, if $N_e(n-1) >$ Input shaft speed Ni,
$T_c < 0$, if $N_e(n-1) <$ Input shaft speed Ni,
where:

$N_e(n)$ is the current value of the pseudo engine speed [rad/sec],
$N_e(n-1)$ is the previous value of the pseudo engine speed [rad/sec],
$T_{dr}$ is the operator torque request [Nm],
$I_e$ is the engine inertia [kg.m$^2$],
$T_c$ is the clutch torque capacity of disconnect clutch 7 [Nm], which depends on normal force acting on disconnect clutch 7 that can be adjusted depending on operator input to clutch pedal 71 (i.e., the amount of torque that can be transmitted by disconnect clutch 7 when it is slipping or when it is fully closed),
$t_p$ is the time period [sec] that is the reciprocal of the frequency indicative of the number of repetitions of execution of a program in one second.

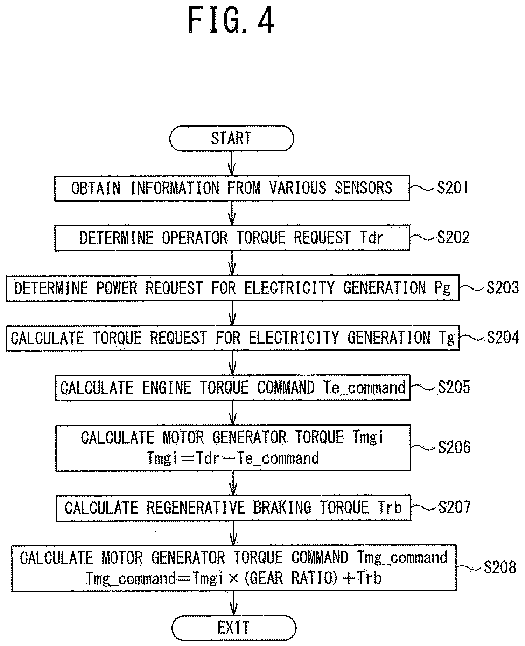

Referring now to FIG. 4, a flowchart of a method for calculating motor generator torque command $T_{mg\_command}$ to motor generator 3 in a driveline of hybrid electric vehicle 1 in HEV mode is described. The method of FIG. 4 may be stored in non-transitory memory of controller 10 (ECU) of FIG. 1 as executable instructions. It starts following determination that there is a shift to HEV mode and proceeds to exit following determination that there is a shift from HEV mode to EV mode.

At step S201, the method of FIG. 4 obtains information from various sensors for hybrid vehicle 1. Information from various sensors for hybrid vehicle 1 may include but is not limited to vehicle speed, engine speed of engine 2, gear stick position, operator input via of accelerator pedal 90, operator input to clutch pedal 71, and operator input to brake pedal 92. After step S201, the method of FIG. 4 proceeds to step S202.

At step S202, the method of FIG. 4 retrieves executable data as illustrated in the map of FIG. 5 using operator input via accelerator pedal 90 and engine speed of engine 2 to determine operator torque request $T_{dr}$. After step S202, the method of FIG. 4 proceeds to step S203.

In the operator torque request map of FIG. 5, in order to carry out power assist by motor generator 3, the fully drawn operator torque request curve (with operator input via accelerator pedal of 100 %) consists of torque values greater than currently available engine torque of engine 2 ('Operator torque request > Available engine torque').

At step S203, the method of FIG. 4 calculates a power request for electricity generation $P_g$, i.e., a request value of power to be generated by motor generator 3 to meet power level required for recharging battery 31, depending on the SOC of battery 31 and vehicle speed (or motor generator speed $N_{mg}$ of motor generator 3). After step S203, the method of FIG. 4 proceeds to step S204.

In order to enable battery recharge caused by regenerative braking at deceleration, power request for electricity generation $P_g$ should be set in a way of lowering the request value of power to be generated by motor generator 3 following determination that the SOC of battery 31 is high to prevent the SOC of battery 31 from becoming too high.

Moreover, power request for electricity generation $P_g$ should be set in a way of reducing the request value of power to be generated by motor generator 3 to zero following determination that the vehicle speed is too low for motor generator 3 to generate electricity.

If it is necessary to limit power used for recharging battery 31 at low battery temperatures, power request for electricity generation $P_g$ should be set in a way of reducing the request value of power to be generated by motor generator 3 to an appropriate value below the limit.

In order to improve energy efficiency derived from fuel-cut operation, power request for electricity generation $P_g$ should be set in a way of reducing the power level required for recharging battery 31 to zero following determination that operator input via accelerator pedal 90 is zero. If there were a request for the power level required for recharging battery 31, motor generator 3 would cause engine 2 to operate consuming fuel for generating the power level required for recharging battery 31 at deceleration. Accordingly, the effectiveness of fuel-cut operation to improvement of energy efficiency decreases because engine 2 keeps operating with low load.

At step S204, the method of FIG. 4 divides power request for electricity generation $P_g$ by motor generator speed $N_{mg}$ of motor generator 3 to give a torque on the rotor of motor generator 3. It divides the torque on the rotor of motor generator 3 by a gear ratio for the gear stage selected in manual transmission 4 to give a torque on the input shaft of manual transmission 4 as a torque request for electricity generation $T_g$, i.e., $T_g = (P_g \div N_{mg}) \div$ (gear ratio). After step S204, the method of FIG. 4 proceeds to step S205.

At step S205, the method of FIG. 4 calculates an engine torque command $T_{e\_command}$ as defined by the following Equation (5).

$$T_{e\_command} = T_{dr} + T_g, \text{ if } (T_{dr} + T_g) \leqq T_{e\_command\_upper},$$

$$T_{e\_command} = T_{e\_command\_upper}, \text{ if } (T_{dr} + T_g) > T_{e\_command\_upper} \ldots (5),$$

where:

$T_{e\_command}$ is the engine torque command,
$T_{dr}$ is the operator torque request,
$T_g$ is the torque request for electricity generation,
$T_{e\_command\_upper}$ is the upper engine torque command threshold.

The upper engine torque command threshold $T_{e\_command\_upper}$ may be the engine torque upper limit or any engine torque threshold, which is lower than the engine torque upper limit to prevent the fuel efficiency of engine 2 from getting worse and worse. After step S205, the method of FIG. 4 proceeds to step S206.

At step S206, the method of FIG. 4 calculates motor generator torque on input shaft $T_{mgi}$, which is the torque on the input shaft of transmission 4, by subtracting engine torque command $T_{e\_command}$ from operator torque request $T_{dr}$, i.e., $T_{mgi} = T_{dr} - T_{e\_command}$. If $T_{dr}$ is greater than $T_{e\_command}$ (e.g., during driving at full throttle with accelerator pedal 90 fully depressed), the sigh of motor generator torque on input shaft $T_{mgi}$ becomes positive. This means that the torque produced by motor generator 3 has positive property to provide power assist. This is the situation where motor generator 3 works as a motor. If $T_{dr}$ is less than $T_{e\_command}$ (e.g., during driving with accelerator pedal 90 less depressed and with a request for electricity generation), the sigh of MG torque $T_{mgi}$ becomes negative. This means that the torque produced by motor generator 3 has negative property to provide electricity generation. This is the situation where motor generator 3 works as a generator. After step S206, the method of FIG. 4 proceeds to step S207.

At step S207, the method of FIG. 4 calculates regenerative braking torque $T_{rb}$ as a function of motor generator speed $N_{mg}$ and operator input to brake pedal 92. After step S207, the method of FIG. 4 proceeds to step S208.

At step S208, the method of FIG. 4 adds regenerative braking torque $T_{rb}$ to the product of motor generator torque on input shaft $T_{mgi}$ and gear ratio of the gear stage selected by manual transmission 4 to make motor generator torque command $T_{mg\_command}$, i.e., $T_{mg\_command} = T_{mgi} \times$ (gear ratio) $+ T_{rb}$. It is to be noted that gear ratio is zero during driving with manual transmission in neutral. After S208, the method of FIG. 4 proceeds to exit.

Referring now to FIG. 7, an example sequence for operating a hybrid vehicle powertrain in response to varying pedal travel of a brake pedal during coasting with a manual transmission in neutral. The sequence of FIG. 7 may be performed via the method executed in the system described in FIGS. 1-6. At time t1, the driver releases the accelerator pedal 90 (i.e., the valve travel of accelerator pedal 90 is 0 %) with the manual transmission 4 not in neutral (i.e., gear stick 40 is placed at the drive "D" position) and the vehicle speed gradually decreases.

At time t2, the system prohibits regenerative-power generation when the driver places the gear stick 40 at the neutral "N" position when the vehicle is in motion to start coasting with the manual transmission in neutral.

At time t3, the system permits regenerative-power generation when the driver applies the brake pedal 92 and regenerative braking torque $T_{rb}$ increases.

At time t4, regenerative braking torque $T_{rb}$ levels off at a predetermined upper limit. At time t5, friction braking torque increases depending on operator input to brake pedal 92.

In the examples, controller 10 grants regenerative-power generation permission in response to operator input to a brake pedal 92 even during coasting with transmission 4 in neutral to permit regenerative-power generation via motor generator 3 over the period of operator input to brake pedal 92 during coasting with transmission 4 in neutral.

Regenerative-power generation is permitted over the period of operator input to brake pedal 92 during coasting with transmission 4 in neutral. This proves to be effective in preventing a drop in energy efficiency in hydraulic electric vehicle 1.

Controller 10 prohibits regenerative-power generation via motor generator 3 during coasting with transmission 4 in neutral or with disconnect clutch 7 opened but permits regenerative-power generation via motor generator 3 over the period of operator input to the brake pedal 92 even during coasting with transmission 4 in neutral or with disconnect clutch 7 opened.

Regenerative-power generation is permitted over the period of operator input to the brake pedal 92 even during coasting with disconnect clutch 7 opened, proving more effective in preventing a drop in energy efficiency in hydraulic electric vehicle 1.

Controller 10 operates, in EV mode, motor generator 3 in a torque control mode during coasting with the transmission 4 not in neutral to provide a brake force component simulating engine braking that would occur upon release of accelerator pedal 90 in HEV mode to supplement a friction brake force component depending on operator input to brake pedal 92. Moreover, controller 10 operates, in EV mode, motor generator 3 in a torque control mode during coasting with transmission 4 in neutral to provide a brake force component depending on operator input to brake pedal 92 to supplement a friction brake force component depending on operator input to the brake pedal 92.

The above-mentioned control strategy of providing, in EV mode, a brake force component simulating engine braking proves to be effective in reducing a difference in response of brake force to operator input to brake pedal 92 between EV mode and HEV mode, which difference may be objectionable to a driver.

Thus, motor generator 3 is operated in a torque control mode to provide a brake force component simulating engine braking even in EV mode during coasting with transmission 4 not in neutral.

During coasting with transmission in neutral, it is no longer necessary to simulate engine braking. Thus, motor generator 3 is operated in a torque control mode to provide a brake force component depending on operator input to brake pedal 92.

This control strategy enables regenerative-power generation without an audible noise and a lapse in driveline torque which may be objectionable to a driver, contributing to improvement of energy efficiency in hybrid electric vehicle 1.

Referring to FIG. 6, controller 10 provides an operator intended total brake torque $T_{total\_b}$ by combining regenerative braking torque $T_{rb}$ with friction braking torque ($T_{fb}$) following determination that operator input to brake pedal 92 is not less than a predetermined value, but it provides only regenerative braking torque $T_{rb}$ as an operator intended total brake torque $T_{total\_b}$ following determination that operator input to brake pedal 92 is less than the predetermined value.

When pressing brake pedal 92, there is some play before friction braking torque $T_{fb}$ appears. In the present example, only regenerative braking torque $T_{rb}$ appears as an operator intended total brake torque $T_{total\_b}$ before friction braking torque $T_{fb}$ appears, increasing opportunity for regenerative-power generation to improve energy efficiency in hybrid electric vehicle 1.

Within a predetermined range where operator input to brake pedal 92 is less than a predetermined value, regenerative braking torque $T_{rb}$ reaches a predetermined upper limit. Subsequently, regenerative braking torque $T_{rb}$ keeps the predetermined upper limit irrespective of increasing operator input to the brake pedal 92 beyond the predetermined value (see the two-dot line drawn regenerative braking torque $T_{rb}$ in FIG. 6 and/or the fully drawn line in the fifth spot from the top of FIG. 7). As readily seen from the fifth, sixth and seventh spots from the top of FIG. 7, within the predetermined range where operator input to brake pedal 92 is less than the predetermined value, friction braking torque $T_{fb}$ does not appear. At time t5, friction braking torque $T_{fb}$ appears. At time t4 before the appearance of friction braking torque $T_{fb}$ at time t5, regenerative braking torque $T_{rb}$ reaches the predetermined upper limit. The sequence that regenerative braking torque $T_{rb}$ reaches the predetermined upper limit before the appearance of friction braking torque $T_{fb}$ contributes a lot to improvement of energy efficiency of hybrid electric vehicle 1.

In the foregoing examples, a controller in a hybrid electric vehicle is shown to judge and/or calculate using inputs from various sensors coupled to the vehicle.

[Description of Reference Numerals]

| | |
|---|---|
| 1 | Hybrid electric vehicle |
| 2 | Engine |
| 3 | Motor generator (Electric machine) |
| 4 | Manual transmission (Transmission) |
| 6 | Vehicle wheels |
| 7 | Disconnect clutch |
| 10 | Controller (ECU) |
| 11 | Vehicle speed senor |
| 40 | Gear stick |
| 41 | Gear stick position sensor |
| 42 | Neutral switch |
| 71 | Clutch pedal |
| 72 | Clutch pedal sensor |
| 90 | Accelerator pedal |
| 91 | Accelerator pedal sensor |
| 92 | Brake pedal |
| 93 | Brake pedal sensor |

**Claims**

1. A hybrid electric vehicle control device for a hybrid electric vehicle, which includes:

   a transmission (4) switchable between different gear stages in response to a change in position at which a gear stick (40) is placed,
   an engine (2) for driving vehicle wheels (6) through the transmission,
   an electric machine (3) positioned between the transmission (4) and the vehicle wheels (6), wherein said hybrid electric vehicle control device comprises
   a controller (10) including executable instructions stored in memory for denying regenerative-power generation permission to prohibit regenerative-power generation via the electric machine (3) during coasting with the transmission (4) in neutral,
   **characterized in that**
   the controller (10) is configured to grant the regenerative-power generation permission in response to operator input to a brake pedal (92) even during coasting with the transmission (4) in neutral to permit regenerative-power generation via the electric machine (3) over the period of operator input to the brake pedal (92) during coasting with the transmission (4) in neutral.

2. The hybrid electric vehicle control device as claimed in claim 1, wherein:

   the transmission (4) is a manual transmission,
   the manual transmission (4) and the engine (2) have a disconnect clutch (7) therebetween, and
   the controller (10) prohibits regenerative-power generation via the electric machine (3) during coasting with the transmission (4) in neutral or with the disconnect clutch (7) opened but permits regenerative-power generation via the electric machine (3) over the period of operator input to the brake pedal (92) even during coasting with the transmission (4) in neutral or with the disconnect clutch (7) opened.

3. The hybrid electric vehicle control device as claimed in claim 1 or 2, wherein:

the controller (10) operates, in EV mode, the electric machine (3) in a torque control mode during coasting with the transmission (4) not in neutral to provide a brake force component simulating engine braking that would occur upon release of an accelerator pedal (90) in HEV mode to supplement a friction brake force component depending on operator input to the brake pedal (92), and

the controller (10) operates, in EV mode, the electric machine (3) in a torque control mode during coasting with the transmission (4) in neutral to provide a brake force component depending on operator input to the brake pedal (92) to supplement a friction brake force component depending on operator input to the brake pedal (92).

**4.** The hybrid electric vehicle control device as claimed in any one of claims 1 to 3, wherein:

the controller (10) provides an operator intended total brake torque ($T_{total\_b}$) by combining regenerative braking torque ($T_{rb}$) with friction braking torque ($T_{fb}$) following determination that operator input to the brake pedal (92) is not less than a predetermined value, and

the controller (10) provides only regenerative braking torque ($T_{rb}$) as an operator intended total brake torque ($T_{total\_b}$) following determination that operator input to the brake pedal (92) is less than the predetermined value.

**5.** The hybrid electric vehicle control device as claimed in claim 4, wherein:
within a predetermined range where operator input to the brake pedal (92) is less than the predetermined value, regenerative braking torque ($T_{rb}$) reaches a predetermined upper limit.

**Patentansprüche**

**1.** Eine Hybrid-Elektrofahrzeug-Steuervorrichtung für ein Hybrid-Elektrofahrzeug, die Folgendes umfasst:

ein Getriebe (4), das zwischen verschiedenen Gangstufen in Reaktion auf eine Änderung der Position, in der ein Schaltknüppel (40) platziert ist, umschaltbar ist,
einen Motor (2) zum Antreiben von Fahrzeugrädern (6) über das Getriebe,
eine elektrische Maschine (3), die zwischen dem Getriebe (4) und den Fahrzeugrädern (6) angeordnet ist, wobei die Hybrid-Elektrofahrzeug-Steuervorrichtung aufweist:

eine Steuerung (10), die in einem Speicher gespeicherte ausführbare Instruktionen enthält, um eine Erlaubnis zur Erzeugung von regenerativer Energie zu verweigern, um die Erzeugung von regenerativer Energie über die elektrische Maschine (3) während des Leerlaufs mit dem Getriebe (4) in Neutralstellung zu verhindern,
**dadurch gekennzeichnet, dass**
die Steuerung (10) konfiguriert ist, um die Erlaubnis zur Erzeugung von regenerativer Energie in Reaktion auf eine Bedienereingabe auf ein Bremspedal (92) sogar während des Leerlaufs mit dem Getriebe (4) in Neutralstellung zu erteilen, um die Erzeugung von regenerativer Energie über die elektrische Maschine (3) über den Zeitraum der Bedienereingabe auf das Bremspedal (92) während des Leerlaufs mit dem Getriebe (4) in Neutralstellung zu ermöglichen.

**2.** Die Hybrid-Elektrofahrzeug-Steuervorrichtung nach Anspruch 1, wobei:

das Getriebe (4) ein Schaltgetriebe ist,
das Schaltgetriebe (4) und der Motor (2) eine Trennkupplung (7) zwischen sich haben, und
die Steuerung (10) die Erzeugung von regenerativer Energie über die elektrische Maschine (3) während des Leerlaufs mit dem Getriebe (4) in Neutralstellung oder mit geöffneter Trennkupplung (7) verbietet, aber die Erzeugung von regenerativer Energie über die elektrische Maschine (3) über den Zeitraum der Bedienereingabe auf das Bremspedal (92) sogar während des Leerlaufs mit dem Getriebe (4) in Neutralstellung oder mit geöffneter Trennkupplung (7) erlaubt.

**3.** Die Hybrid-Elektrofahrzeug-Steuervorrichtung nach Anspruch 1 oder 2, wobei:

die Steuerung (10) im EV-Modus die elektrische Maschine (3) in einem Drehmomentsteuerungsmodus während des Leerlaufs betreibt, wobei sich das Getriebe (4) nicht in Neutralstellung befindet, um eine Bremskraftkomponente bereitzustellen, die eine Motorbremsung simuliert, die beim Loslassen eines Gaspedals (90) im HEV-Modus auftreten würde, um eine Reibungsbremskraftkomponente zu ergänzen, die von der Bedienereingabe auf das Bremspedal (92) abhängt, und
die Steuerung (10) im EV-Modus die elektrische Maschine (3) in einem Drehmomentsteuerungsmodus während des Leerlaufs mit dem Getriebe (4) in Neutralstellung betreibt, um eine Bremskraftkomponente in Abhängigkeit von der Bedienereingabe auf das Bremspedal (92) bereitzustellen, um eine Reibungsbremskraftkomponente in Abhängigkeit von der Bedienereingabe auf das Bremspedal (92) zu ergänzen.

4. Die Hybrid-Elektrofahrzeug-Steuervorrichtung nach einem der Ansprüche 1 bis 3, wobei:

die Steuerung (10) ein vom Bediener beabsichtigtes Gesamtbremsmoment ($T_{total\_b}$) bereitstellt, indem das regenerative Bremsmoment ($T_{rb}$) mit dem Reibungsbremsmoment ($T_{fb}$) kombiniert wird, nachdem festgestellt wurde, dass die Bedienereingabe auf das Bremspedal (92) nicht kleiner als ein vorbestimmter Wert ist, und die Steuerung (10) nur das regenerative Bremsmoment ($T_{rb}$) als ein vom Bediener beabsichtigtes Gesamtbremsmoment ($T_{total\_b}$) bereitstellt, nachdem festgestellt wurde, dass die Bedienereingabe auf das Bremspedal (92) kleiner als der vorbestimmte Wert ist.

5. Die Hybrid-Elektrofahrzeug-Steuervorrichtung nach Anspruch 4, wobei:
innerhalb eines vorbestimmten Bereichs, in dem die Bedienereingabe auf das Bremspedal (92) kleiner als der vorbestimmte Wert ist, das regenerative Bremsmoment ($T_{rb}$) eine vorbestimmte Obergrenze erreicht.

**Revendications**

1. Dispositif de commande de véhicule électrique hybride pour un véhicule électrique hybride, qui comporte :

une transmission (4) pouvant être commutée entre différents rapports en réponse à un changement de position à laquelle un levier de vitesse (40) est placé,
un moteur (2) pour entraîner des roues de véhicule (6) par l'intermédiaire de la transmission,
une machine électrique (3) positionnée entre la transmission (4) et les roues de véhicule (6), dans lequel ledit dispositif de commande de véhicule électrique hybride comprend
une unité de commande (10) comportant des instructions exécutables stockées en mémoire pour refuser une permission de génération de puissance régénérative pour interdire une génération de puissance régénérative via la machine électrique (3) en roue libre avec la transmission (4) au point mort,
**caractérisé en ce que**
l'unité de commande (10) est configurée pour accorder la permission de génération de puissance régénérative en réponse à une entrée d'opérateur sur une pédale de frein (92) même en roue libre avec la transmission (4) au point mort pour permettre une génération de puissance régénérative via la machine électrique (3) au cours de la période d'entrée d'opérateur sur la pédale de frein (92) en roue libre avec la transmission (4) au point mort.

2. Dispositif de commande de véhicule électrique hybride selon la revendication 1, dans lequel :

la transmission (4) est une transmission manuelle,
la transmission manuelle (4) et le moteur (2) ont un embrayage de coupure (7) entre eux, et
l'unité de commande (10) interdit une génération de puissance régénérative via la machine électrique (3) en roue libre avec la transmission (4) au point mort ou avec l'embrayage de coupure (7) ouvert mais permet une génération de puissance régénérative via la machine électrique (3) au cours de la période d'entrée d'opérateur sur la pédale de frein (92) même en roue libre avec la transmission (4) au point mort ou avec l'embrayage de coupure (7) ouvert.

3. Dispositif de commande de véhicule électrique hybride selon la revendication 1 ou 2, dans lequel :

l'unité de commande (10) actionne, en mode EV, la machine électrique (3) dans un mode de commande de couple en roue libre avec la transmission (4) pas au point mort pour fournir une composante de force de freinage simulant un freinage moteur qui surviendrait lors d'un relâchement d'une pédale d'accélérateur (90) en mode HEV pour compléter une composante de force de freinage par friction en fonction d'une entrée d'opérateur sur la pédale de frein (92), et
l'unité de commande (10) actionne, en mode EV, la machine électrique (3) dans un mode de commande de couple en roue libre avec la transmission (4) au point mort pour fournir une composante de force de freinage en fonction d'une entrée d'opérateur sur la pédale de frein (92) pour compléter une composante de force de freinage par friction en fonction d'une entrée d'opérateur sur la pédale de frein (92).

4. Dispositif de commande de véhicule électrique hybride selon l'une quelconque des revendications 1 à 3, dans lequel :

l'unité de commande (10) fournit un couple de freinage total attendu par un opérateur ($T_{total\_b}$) par la combinaison d'un couple de freinage régénératif ($T_{rb}$) avec un couple de freinage par friction ($T_{fb}$) à la suite d'une détermination qu'une entrée d'opérateur sur la pédale de frein (92) n'est pas inférieure à une valeur prédéterminée, et l'unité de commande (10) fournit uniquement un couple de freinage régénératif ($T_{rb}$) en tant qu'un couple de freinage total attendu par un opérateur ($T_{total\_b}$) à la suite d'une détermination qu'une entrée d'opérateur sur la pédale de frein (92) est inférieure à la valeur prédéterminée.

5. Dispositif de commande de véhicule électrique hybride selon la revendication 4, dans lequel :
à l'intérieur d'une plage prédéterminée dans laquelle une entrée d'opérateur sur la pédale de frein (92) est inférieure à la valeur prédéterminée, un couple de freinage régénératif ($T_{rb}$) atteint une limite supérieure prédéterminée.

# FIG. 1

EP 3 995 336 B1

# FIG. 2

START

OBTAIN INFORMATION FROM VARIOUS SENSORS  ~S1

CALCULATE PSEUDO ENGINE SPEED Ne(n)  ~S2

DETERMINE OPERATOR TORQUE REQUEST Tdr  ~S3

CALCULATE PSEUDO ENGINE
INERTIA TORQUE TIe(n)  ~S4

CALCULATE PSEUDO INPUT SHAFT TORQUE Tin
$Tin = Tdr + TIe(n)$  ~S5

CALCULATE REGENERATIVE BRAKING TORQUE Trb  ~S6

CALCULATE MOTOR GENERATOR TORQUE COMMAND Tmg_command
$Tmg\_command = Tin \times (GEAR\ RATIO) + Trb$  ~S7

EXIT

# FIG. 3

START

S101 — TRANSMISSION IN NEUTRAL?

NO → S103 — IS DISCONNECT CLUTCH 7 CLOSED?

YES (S101) → S102 — CALCULATE PSEUDO ENGINE SPEED Ne(n) USING OPERATOR TORQUE REQUEST Tdr AND MOMENT OF INERTIA OF ENGINE 2

YES (S103) → S104 — CALCULATE PSEUDO ENGINE SPEED Ne(n) USING MOTOR GENERATOR SPEED AND GEAR STICK POSITON

NO → S105 — CALCULATE PSEUDO ENGINE SPEED Ne(n) USING OPERATOR TORQUE REQUEST Tdr, CLUTCH TRANSMITTING TORQUE, AND MOMENT OF INERTIA OF ENGINE 2

EXIT

18

# FIG. 4

START

OBTAIN INFORMATION FROM VARIOUS SENSORS — S201

DETERMINE OPERATOR TORQUE REQUEST Tdr — S202

DETERMINE POWER REQUEST FOR ELECTRICITY GENERATION Pg — S203

CALCULATE TORQUE REQUEST FOR ELECTRICITY GENERATION Tg — S204

CALCULATE ENGINE TORQUE COMMAND Te_command — S205

CALCULATE MOTOR GENERATOR TORQUE Tmgi
$Tmgi = Tdr - Te\_command$ — S206

CALCULATE REGENERATIVE BRAKING TORQUE Trb — S207

CALCULATE MOTOR GENERATOR TORQUE COMMAND Tmg_command
$Tmg\_command = Tmgi \times (GEAR\ RATIO) + Trb$ — S208

EXIT

# FIG. 5

OPERTATOR TORQUE REQUEST
(CRANKSHAFT AXLE TORQUE)

OPERATOR INPUT VIA
ACCELERATOR PEDAL (APS) =100%

APS=50%

APS=0%

0

ENGINE SPEED
(PSEUDO ENGINE SPEED)

EP 3 995 336 B1

# FIG. 6

# FIG. 7

GEAR STICK POSITION

VEHICLE SPEED

OPERATOR INPUT VIA ACCELERATOR PEDAL

REGENERATIVE-POWER GENERATION PERMISSION

REGENERATIVE BRAKING TORQUE

FRICTION BRAKING TORQUE

OPERATOR INPUT TO BRAKE PEDAL

**EP 3 995 336 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011246065 A
- US 2015142230 A1